# EUROPÄISCHE PATENTANMELDUNG

(11) **EP 4 125 007 A1**
(43) Veröffentlichungstag der Anmeldung: **01.02.2023**
(21) Anmeldenummer: 22181515.2
(22) Anmeldetag: 28.06.2022
(51) Int. Cl.: G06N 3/08

(54) **VERFAHREN ZUM BEREITSTELLEN VON TRAININGSDATEN ZUM ANLERNEN EINES KÜNSTLICHEN NEURONALEN NETZES, VERFAHREN ZUM ANLERNEN EINES KÜNSTLICHEN NEURONALEN NETZES, COMPUTERPROGRAMMPRODUKT UND DATENSTRUKTUR**

(30) Priorität: 29.07.2021 DE 102021208187
(71) Anmelder: VOLKSWAGEN AG, 38440 Wolfsburg (DE)
(72) Erfinder: Glück, Matthias, 38176 Wendeburg (DE)

(57) **Zusammenfassung**

Die Erfindung betrifft ein Verfahren zum Bereitstellen von Trainingsdaten (D1, D2) zum Anlernen eines künstlichen neuronalen Netzes (KNN), insbesondere zum Verwenden bei einem automatisierten und/oder autonomen Fahren,
aufweisend folgende Schritte:
- Bereitstellen von Trainingsdaten (D1) bei einem Szenario (S) einer vorgesehenen Verwendung des trainierten künstlichen neuronalen Netzes (KNN), um eine Sequenz (D1(t)) von Trainingsdaten (D1) zum Trainieren des künstlichen neuronalen Netzes (KNN) zu erhalten,
- Manipulieren von Trainingsdaten (D1), insbesondere derselben Sequenz (D1(t)), indem dem Szenario (S) mindestens ein Extremwert (W) aufgeprägt wird, um eine abgeänderte Sequenz (D2(t)) von verschärften Trainingsdaten (D2) zum Trainieren des künstlichen neuronalen Netzes (KNN) zu erhalten

## Beschreibung

Die Erfindung betrifft ein Verfahren zum Bereitstellen von Trainingsdaten zum Anlernen eines künstlichen neuronalen Netzes, insbesondere zum Verwenden bei einem hoch automatisierten und/oder autonomen Fahren, nach dem unabhängigen Verfahrensanspruch. Ferner betrifft die Erfindung ein Verfahren zum Anlernen bzw. zum Trainieren eines künstlichen neuronalen Netzes, insbesondere zur Verwendung bei einem automatisierten und/oder autonomen Fahren, nach dem nebengeordneten unabhängigen Verfahrensanspruch. Zudem betrifft die Erfindung ein entsprechendes Computerprogrammprodukt und eine entsprechende Datenstruktur.

Autonomes Fahren ist in aller Munde. Um ein hoch automatisiertes und/oder autonomes Fahren zu ermöglichen, werden vermehrt Technologien verwendet, die die künstliche Intelligenz nutzen. Die künstliche Intelligenz kann bspw. Umgebungsdaten eines Fahrzeuges über komplexe Sensorik auswerten und bestimmten Aktuatoren im Fahrzeug entsprechende Befehle zur Reaktion auf die Umgebungsdaten geben. Die künstliche Intelligenz kann allerdings selbstlernend sein, da sie auf den Techniken des maschinellen Lernens beruht. Bei den traditionellen Techniken des maschinellen Lernens wird ein künstliches neuronales Netz mithilfe von Trainingsdaten trainiert, die zumeist begrenzt sind und/oder nicht das wahre Leben, zumindest nicht im vollen Umfang, abbilden. Aus diesem Grund kommt es heutzutage immer noch zu schweren Unfällen bei autonom fahrenden Fahrzeugen.

Aufgabe der Erfindung ist daher, die oben genannten Nachteile zumindest zum Teil zu überwinden. Insbesondere ist es Aufgabe der Erfindung, ein verbessertes Verfahren zum Bereitstellen von Trainingsdaten zum Anlernen eines künstlichen neuronalen Netzes zur Verfügung zu stellen, welches verbesserte Trainingsdaten zum Anlernen eines künstlichen neuronalen Netzes bereitstellt, welches die Menge an erforderlichen Bildaufnahmen und/oder Sensorwerten für die Trainingsdaten auf eine vorteilhafte Weise reduziert, ohne die Qualität der Trainingsdaten herabzusetzen, sondern vielmehr zu erhöhen, welches ein verbessertes Anlernen eines künstlichen neuronalen Netzes ermöglicht und welches die Sicherheit beim Verwenden des angelernten bzw. trainierten neuronalen Netzes erheblich erhöht, insbesondere bei einem automatisierten und/oder autonomen Fahren. Ferner ist es Aufgabe der Erfindung, ein verbessertes Verfahren zum Anlernen bzw. zum Trainieren eines künstlichen neuronalen Netzes, insbesondere zur Verwendung bei einem automatisierten und/oder autonomen Fahren, zur Verfügung zu stellen. Zudem ist es Aufgabe der Erfindung, ein entsprechendes Computerprogrammprodukt und eine entsprechende Datenstruktur mit korrespondieren Trainingsdaten zur Verfügung zu stellen.

Die erfindungsgemäße Aufgabe wird gelöst durch: ein Verfahren zum Bereitstellen von Trainingsdaten zum Anlernen eines künstlichen neuronalen Netzes, insbesondere zum Verwenden bei einem hoch automatisierten und/oder autonomen Fahren, nach dem unabhängigen Verfahrensanspruch, ein Verfahren zum Anlernen bzw. zum Trainieren eines künstlichen neuronalen Netzes, insbesondere zur Verwendung bei einem automatisierten und/oder autonomen Fahren, nach dem nebengeordneten unabhängigen Verfahrensanspruch, ein Computerprogrammprodukt nach dem unabhängigen Produktanspruch und eine entsprechende Datenstruktur nach dem nebengeordneten unabhängigen Produktanspruch.

Die Erfindung stellt bereit: ein Verfahren zum Bereitstellen von Trainingsdaten zum Anlernen bzw. Trainieren eines künstlichen neuronalen Netzes, insbesondere als Teil einer künstlichen Intelligenz, vorzugsweise zum Verwenden bei einem (hoch-)automatisierten und/oder autonomen Fahren,
aufweisend folgende Schritte bzw. Stufen:
- erste Stufe: Bereitstellen von Trainingsdaten bei einem (realen und /oder simulierten) Szenario einer vorgesehenen Verwendung des trainierten künstlichen neuronalen Netzes, um eine (gemeint ist erste) Sequenz von Trainingsdaten zum Trainieren des künstlichen neuronalen Netzes zu erhalten,
- zweite Stufe: Manipulieren von Trainingsdaten, insbesondere derselben Sequenz (d. h. der Sequenz aus der ersten Stufe), indem dem Szenario mindestens ein Extremwert aufgeprägt wird, um eine abgeänderte Sequenz von verschärften (gemeint ist angepassten und insbesondere zusätzlichen) Trainingsdaten zum Trainieren des künstlichen neuronalen Netzes zu erhalten.

Mithilfe des Verfahrens können die Trainingsdaten für ein oder für mehrere neuronale Netze einzeln oder in Kombination bereitgestellt werden, die jeweils unterschiedliche Funktionen bei einer vorgesehenen Verwendung erfüllen können.

Die Trainingsdaten können Bildaufnahmen und/oder Sensorwerte umfassen. Die Trainingsdaten werden von dem künstlichen neuronalen Netz ausgewertet, um Eingaben als Neuronen des künstlichen neuronalen Netzes zu bestimmen. Die Eingaben werden gewichtet und über eine bestimmte Übertragungsfunktion zu einer Netzeingabe verarbeitet. Der Anwender kann PASS/FAIL-Kriterien für die Netzeingabe in Abhängigkeit von unterschiedlichen Situationen bzw. Szenarien definieren, um das künstliche neuronale Netz zu trainieren.

Unter einem Szenario zum Verwenden bei einem automatisierten und/oder autonomen Fahren kann bspw. eine Verkehrssituation entlang eines Streckenabschnittes auf einer Route eines Fahrzeuges verstanden werden.

Der mindestens eine Extremwert bei einem Szenario kann bspw. mindestens eine oder mehrere unterschiedliche Eventualitäten umfassen, die sich bei einer Verkehrssituation entlang eines Streckenabschnittes auf einer Route eines Fahrzeuges ereignen können, wie z. B.:
- einen Steinschlag in der Frontscheibe,
- einen Reifen-Platzer,
- einen herunterfallenden Ast bei Starkwind,
- eine Extremsituation an Kreuzungen, Baustellen, Zubringerauffahrten usw.,
- einen plötzlichen Regen oder einen Hagel,
- ein Blitz-Eis,
- ein bei Rot über die Ampel fahrendes Fahrzeug,
- einen Gegenstand auf der Fahrbahn,
- eine Person auf der Fahrbahn,
- ein entgegenkommendes Fahrzeug,
- eine hohe Fahrzeugdichte,
- viele Passanten und Radfahrer,
- kaputte(s) nicht erkennbare(s) Straßenschild(er), und/oder
- Beschädigungen von Sensoren, wie z. B. einer Frontkamera, usw.

Die Erfindung erkennt, dass zum Bereitstellen von Trainingsdaten zum Anlernen eines neuronalen Netzes, zahlreiche Straßen virtuell oder real abgefahren werden müssen, um das neuronale Netz zuverlässig trainieren zu können. Je besser, vielfältiger und umfangreicher die Trainingsdaten sind, desto zuverlässiger kann das neuronale Netz trainiert werden, um ein mögliches Fehlverhalten des neuronalen Netzes vermeiden zu können und die Sicherheit beim Verwenden des trainierten neuronalen Netzes zu erhöhen. Die Qualität der Trainingsdaten steht dabei im direkten Zusammenhang mit der Zuverlässigkeit des neuronalen Netzes bei einer vorgesehenen Verwendung.

Zum Anlernen bzw. Trainieren des neuronalen Netzes kann der Anwender bzw. Tester die Strecken selbst abfahren, um dem künstlichen neuronalen Netz die richtigen Reaktionen bei unterschiedlichen Situationen bzw. Szenarien zu zeigen. Zudem und/oder stattdessen kann der Anwender sog. PASS/FAIL-Kriterien für unterschiedliche Situationen bzw. Szenarien definieren.

Mithilfe der Erfindung kann die Flexibilität beim Bereitstellen von Trainingsdaten erheblich erhöht werden. Zugleich kann der Aufwand und die Menge an Bildaufnahmen und/oder Sensorwerten reduziert werden, um einen erweiterten Set an Trainingsdaten zu erhalten. Insbesondere können mithilfe der Erfindung verbesserte, erweiterte, umfangreichere, vielfältigere Trainingsdaten bereitgestellt werden.

Der Erfindungsgedanke liegt dabei darin, dass die Trainingsdaten in zwei Stufen bereitgestellt werden. In der ersten Stufe werden die Trainingsdaten gemäß einem Szenario unverfälscht erfasst, um eine Sequenz von Trainingsdaten zum Trainieren des künstlichen neuronalen Netzes zu erhalten. Bei der ersten Stufe kann das künstliche neuronale Netz sozusagen über Positivfälle bzw. Standardsituationen, bspw. reguläres Fahren, angelernt werden.

In der zweiten Stufe werden dem gleichen Szenario aus der ersten Stufe mithilfe des mindestens einen Extremwertes verschiedenste Eventualitäten aufgeprägt, um eine abgeänderte Sequenz von verschärften Trainingsdaten zum Trainieren des künstlichen neuronalen Netzes zu erhalten. Bei der zweiten Stufe kann das künstliche neuronale Netz sozusagen über Extremfälle bzw. verschärfte Szenarien angelernt werden. Somit kann mithilfe der Erfindung eine Optimierung des Trainings auf Extrema durchgeführt werden.

Diese verschärften bzw. erweiterten Trainingsdaten können zusammen mit den unverarbeiteten Trainingsdaten zum Trainieren des künstlichen neuronalen Netzes zur Verfügung gestellt werden.

Ferner ist es denkbar, dass nach der zweiten Stufe noch weitere Stufen vorgesehen sein können, in welchen dem gleichen Szenario aus der ersten Stufe unterschiedliche weitere Eventualitäten und/oder Eventualitäten-Kombinationen aufgeprägt werden können, um mehrere weitere, jeweils auf eine unterschiedliche Art abgeänderte Sequenzen von verschärften Trainingsdaten zum Trainieren des künstlichen neuronalen Netzes zu erhalten.

Weiterhin ist es denkbar, dass nicht nur das Szenario abgeändert und die Trainingsdaten manipuliert werden können, sondern auch direkt die Eingaben, die das künstliche neuronale Netz beim Auswerten der Trainingsdaten ermittelt, bspw. durch zufällige Schwankungen.

Vorteilhafterweise können in der ersten Stufe die kritischen Straßensituationen ermittelt bzw. erkannt und/oder prognostiziert werden, um den mindestens einen Extremwert für die zweite Stufe zu bestimmen. Die erkannten kritischen Straßensituationen können weiterhin verschärft werden, um den mindestens einen Extremwert zu erhöhen.

Bei einer Simulation von Szenarien können die Szenarien vereinfacht dargestellt werden. Dabei können die Fahrzeuge bspw. als Punkte auf einer Karte abgebildet werden. Gebäude, Landschaften usw. können zunächst vernachlässigt werden. Der Einfluss von Gebäuden, Landschaften usw. auf den mindestens einen Extremwert kann nachträglich berücksichtigt werden, indem z. B. der mindestens eine Extremwert verschärft bzw. erhöht wird. Hierzu können im nächsten Schritt die Sequenzen der Extremwerte in eine verfeinerte Simulationsumgebung mit Landschaft und Gebäuden, Schildern usw. übertragen werden.

Zum anschließenden Anlernen des neuronalen Netzes mithilfe von den Trainingsdaten aus der ersten Stufe und mithilfe von verschärften Trainingsdaten aus der zweiten Stufe kann ein Anwender bzw. Tester dem künstlichen neuronalen Netz das richtige Verhalten zeigen und/oder durch PASS/FAIL-Kriterien festlegen. Der Auswerte-Algorithmus des künstlichen neuronalen Netzes muss in der ersten Stufe und in der zweiten Stufe bestehen, um das Anlernen erfolgreich abzuschließen. Somit kann das künstliche neuronale Netz die eingestreuten Extrema kennenlernen und anhand der Fahrzeugreaktion eine Klassifikation der möglichen korrekten Reaktionen durchführen.

Ein Extrema-Beispiel kann mithilfe eines Steinschlags in der Frontscheibe vorgestellt werden, bei dem bspw. die Frontkamera in Mitleidenschaft gezogen wurde und damit die Auswertung nach vorne nicht mehr möglich ist. Dabei könnte ein PASS-Kriterium für ein richtiges Fahrzeugverhalten sein, mit reduzierter Geschwindigkeit und eingeschaltetem Warnblinker die nächste Parklücke aufzusuchen. Dagegen kann ein FAIL-Kriterium für ein falsches Fahrzeugverhalten sein, wenn z. B. das Fahrzeug ohne Berücksichtigung der Frontkameraschäden weiterfährt.

Mithilfe der Erfindung können zahlreiche Vorteile erreicht werden, insbesondere kann ein verbessertes Verfahren zum Bereitstellen von Trainingsdaten zum Anlernen eines künstlichen neuronalen Netzes zur Verfügung gestellt werden, welches verbesserte und erweiterte Trainingsdaten zum Anlernen eines künstlichen neuronalen Netzes liefert, welches die Menge an erforderlichen Bildaufnahmen und/oder Sensorwerten für die Trainingsdaten auf eine vorteilhafte Weise reduziert, ohne die Qualität der Trainingsdaten herabzusetzen, sondern vielmehr zu erhöhen, welches ein verbessertes Anlernen eines künstlichen neuronalen Netzes ermöglicht und welches die Sicherheit beim Verwenden des angelernten bzw. trainierten neuronalen Netzes erheblich erhöht, insbesondere bei einem automatisierten und/oder autonomen Fahren. Außerdem kann mithilfe der Erfindung der Kundenkomfort gesteigert und das Vertrauen in die neue Technologie verstärkt werden.

Ferner kann bei einem Verfahren zum Bereitstellen von Trainingsdaten zum Anlernen eines künstlichen neuronalen Netzes vorgesehen sein, dass die Trainingsdaten erfasste und/oder simulierte Bildaufnahmen und/oder Sensorwerte aufweisen. Auf diese Weise können die Umgebungsdaten eines Fahrzeuges erfasst werden, um die Trainingsdaten zum Anlernen eines künstlichen neuronalen Netzes zu gewinnen. Somit kann das künstliche neuronale Netz mithilfe der Trainingsdaten die richtigen Reaktionen auf die Umgebungsdaten erlernen.

Weiterhin kann bei einem Verfahren zum Bereitstellen von Trainingsdaten zum Anlernen eines künstlichen neuronalen Netzes vorgesehen sein, dass in der ersten Stufe das Szenario einen regulären Verlauf bei einer vorgesehenen Verwendung des trainierten künstlichen neuronalen Netzes aufweist. Somit kann die dem künstlichen neuronalen Netz zugrunde liegende künstliche Intelligenz in der ersten Stufe über Positivfälle ein reguläres Fahren erlernen.

Des Weiteren kann bei einem Verfahren zum Bereitstellen von Trainingsdaten zum Anlernen eines künstlichen neuronalen Netzes vorgesehen sein, dass in der zweiten Stufe das manipulierte Szenario mit dem mindestens einen aufgeprägten Extremwert (gemeint ist das Szenario aus der Stufe zwei) einen Notfall-Verlauf bei einer vorgesehenen Verwendung des trainierten künstlichen neuronalen Netzes simuliert. Somit kann die dem künstlichen neuronalen Netz zugrunde liegende künstliche Intelligenz in der zweiten Stufe über Extrema ein Fahren in gefährlichen Situationen erlernen.

Zudem kann bei einem Verfahren zum Bereitstellen von Trainingsdaten zum Anlernen eines künstlichen neuronalen Netzes vorgesehen sein, dass in Abhängigkeit von dem mindestens einen Extremwert ein PASS-Kriterium und/oder ein FAIL-Kriterium zum Bestehen des Szenarios und/oder des manipulierten Szenario mit dem mindestens einen aufgeprägten Extremwert bestimmt wird. Auf diese Weise kann das künstliche neuronale Netz für unterschiedliche Extremwerte automatisiert angelernt werden, ohne dass der Anwender dem künstlichen neuronalen Netz Szenario für Szenario die richtigen Reaktionen aktiv zeigen muss.

Außerdem kann bei einem Verfahren zum Bereitstellen von Trainingsdaten zum Anlernen eines künstlichen neuronalen Netzes vorgesehen sein, dass in der ersten Stufe beim Bereitstellen von Trainingsdaten die Trainingsdaten in einem Normalbetrieb bei einer vorgesehenen Verwendung des trainierten künstlichen neuronalen Netzes erfasst werden. Im Falle von einem (hoch-)automatisiert oder autonom fahrenden Fahrzeug kann dabei das Fahrzeug mehrere Straßenabschnitte auf einer Karte aktiv abfahren, um die Trainingsdaten für die erste Stufe zu erfassen.

Darüber hinaus kann bei einem Verfahren zum Bereitstellen von Trainingsdaten zum Anlernen eines künstlichen neuronalen Netzes vorgesehen sein, dass in der ersten Stufe beim Bereitstellen von Trainingsdaten die Trainingsdaten in einem Simulationsbetrieb bei einer vorgesehenen Verwendung des trainierten künstlichen neuronalen Netzes simuliert werden. Somit können die Trainingsdaten ohne aktives Abfahren von Straßenabschnitten gewonnen werden. Einfachheitshalber kann dabei das Szenario im Simulationsbetrieb vereinfacht dargestellt werden.

Ferner kann bei einem Verfahren zum Bereitstellen von Trainingsdaten zum Anlernen eines künstlichen neuronalen Netzes vorgesehen sein, dass in der ersten Stufe beim Bereitstellen von Trainingsdaten der mindestens eine Extremwert für einen regulären Verlauf des Szenarios ermittelt bzw. erkannt und/oder für einen Notfall-Verlauf des Szenarios vorhergesagt wird. Somit kann der der mindestens eine Extremwert in der ersten Stufe erkannt und/oder vorhergesagt werden, um in der zweiten Stufe genutzt zu werden.

Vorteilhafterweise kann in der zweiten Stufe beim Manipulieren von Trainingsdaten der mindestens eine Extremwert verschärft und/oder neu hinzugefügt wird. Auf diese Weise können Extrema auf des Szenario aus der ersten Stufe aufgeprägt werden.

Weiterhin kann bei einem Verfahren zum Bereitstellen von Trainingsdaten zum Anlernen eines künstlichen neuronalen Netzes vorgesehen sein, dass der mindestens eine Extremwert mindestens einen ersten Extremwert eines ersten Grades umfasst, der für das Szenario spezifisch ist, und/oder dass der mindestens eine Extremwert mindestens einen zweiten Extremwert eines zweiten Grades umfasst, der für die Folgen des Szenarios wahrscheinlich ist. Auf diese Weise kann das Szenario in der zweiten Stufe eine Entwicklung von Eventualitäten berücksichtigen. So kann bspw. eine Baustelle (Extremwert eines ersten Grades) eine Verjüngung der Straße (Extremwert eines zweiten Grades) und/oder einen Stau (Extremwert eines zweiten Grades) nach sich ziehen.

Des Weiteren stellt die Erfindung bereit: ein Verfahren zum Anlernen eines künstlichen neuronalen Netzes, insbesondere zur Verwendung bei einem automatisierten und/oder autonomen Fahren, mithilfe von Trainingsdaten, die durch das Verfahren bereitgestellt wurden, welches wie oben beschrieben ablaufen kann. Da die Qualität eines künstlichen neuronalen Netzes von der Qualität der Trainingsdaten abhängt, kann mithilfe des erfindungsgemäßen Verfahrens ein zuverlässig angelerntes künstliches neuronales Netz bereitgestellt werden. Dabei gelten die Vorteile, die oben im Zusammenhang mit dem Verfahren zum Bereitstellen von Trainingsdaten zum Anlernen eines künstlichen neuronalen Netzes beschrieben wurden vollumfänglich.

Ferner kann bei einem Verfahren zum Anlernen eines künstlichen neuronalen Netzes vorgesehen sein, dass das künstliche neuronale Netz mithilfe der Sequenz von Trainingsdaten trainiert wird, die beim Szenario erhalten wurde, und dass, insbesondere anschließend, das künstliche neuronale Netz mithilfe der abgeänderten Sequenz von verschärften Trainingsdaten trainiert wird, die beim Manipulieren von Trainingsdaten, insbesondere derselben Sequenz, erhalten wurde, indem dem Szenario mindestens ein Extremwert aufgeprägt wurde.

Weiterhin kann bei einem Verfahren zum Anlernen eines künstlichen neuronalen Netzes vorgesehen sein, dass zum Trainieren des künstlichen neuronalen Netzes mindestens ein PASS-Kriterium und/oder mindestens ein FAIL-Kriterium, insbesondere in Abhängigkeit von dem mindestens einen Extremwert, definiert wird.

Zudem stellt die Erfindung bereit: ein Computerprogrammprodukt, umfassend Befehle, die bei der Ausführung des Programms durch einen Computer diesen veranlassen, ein Verfahren zum Bereitstellen von Trainingsdaten zum Anlernen eines künstlichen neuronalen Netzes und/oder ein Verfahren zum Anlernen eines künstlichen neuronalen Netzes auszuführen, welche wie oben beschrieben ablaufen können/kann.

Außerdem stellt die Erfindung bereit: eine Datenstruktur, die insbesondere mithilfe des Verfahrens erhalten wurde, welches wie oben beschrieben ablaufen kann, aufweisend:
- eine Sequenz von Trainingsdaten, die bei einem Szenario erhalten wurde, und
- eine abgeänderte Sequenz von verschärften Trainingsdaten, die beim Manipulieren von Trainingsdaten, insbesondere derselben Sequenz, erhalten wurde, indem dem Szenario mindestens ein Extremwert aufgeprägt wurde.

Mithilfe der erfindungsgemäßen Datenstruktur können die Trainingsdaten zum Anlernen eines künstlichen neuronalen Netzes verbessert abgebildet werden. Der Aufwand beim Erstellen der erfindungsgemäßen Datenstruktur ist auf eine vorteilhafte Weise reduziert und die Qualität der Daten erheblich gesteigert.

Weiterhin wird die Erfindung anhand der Figuren näher dargestellt. Dabei ist zu beachten, dass die Figuren nur einen beschreibenden Charakter haben und nicht dazu gedacht sind, die Erfindung in irgendeiner Form einzuschränken. Es zeigen:
Fig. 1 einen beispielhaften Ablauf eines Verfahrens im Sinne der Erfindung, und
Fig. 2 eine beispielhafte Visualisierung eines Kartenabschnittes zur Erläuterung eines Verfahrens im Sinne der Erfindung.

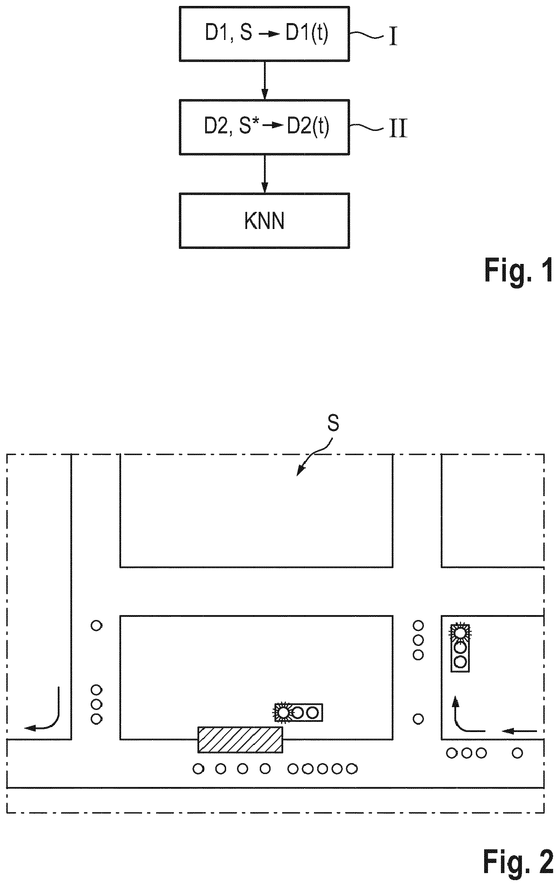

Mithilfe der Figuren 1 und 2 wird ein erfindungsgemäßes Verfahren zum Bereitstellen von Trainingsdaten D1, D2 zum Anlernen bzw. Trainieren eines künstlichen neuronalen Netzes KNN, insbesondere als Teil einer künstlichen Intelligenz, erklärt. Das mit den bereitgestellten Trainingsdaten trainierte künstliche neuronale Netz kann vorzugsweise bei einem (hoch-)automatisierten und/oder autonomen Fahren verwendet werden. Aber auch in anderen Bereichen können die bereitgestellten Trainingsdaten im Sinne der Erfindung auf eine vorteilhafte Weise verwendet werden, um die Qualität der künstlichen neuronalen Netze zu verbessern.

Das Verfahren zum Bereitstellen von Trainingsdaten D1, D2 zum Anlernen bzw. Trainieren eines künstlichen neuronalen Netzes KNN weist folgende Schritte bzw. Stufen auf:
- erste Stufe I: Bereitstellen von Trainingsdaten D1 bei einem Szenario S einer vorgesehenen Verwendung des trainierten künstlichen neuronalen Netzes KNN, um eine (gemeint ist erste) Sequenz D1(t) von Trainingsdaten D1 zum Trainieren des künstlichen neuronalen Netzes KNN zu erhalten,
- zweite Stufe II: Manipulieren von Trainingsdaten D1, insbesondere derselben Sequenz D1(t) (d. h. der Sequenz aus der ersten Stufe), indem dem Szenario S mindestens ein Extremwert W aufgeprägt wird, um eine abgeänderte Sequenz D2(t) von verschärften (gemeint ist angepassten) und insbesondere zusätzlichen Trainingsdaten D2 zum Trainieren des künstlichen neuronalen Netzes KNN zu erhalten.

Im Falle eines autonom fahrenden Fahrzeuges kann für unterschiedliche Funktionen bei einer vorgesehenen Verwendung jeweils ein künstliches neuronales Netz KNN bereitgestellt werden. Mithilfe des Verfahrens können die Trainingsdaten D1, D2 für jedes neuronale Netz KNN einzeln oder in Kombination bereitgestellt werden.

Wie es die Figur 2 andeutet, können die Trainingsdaten D1, D2 Bildaufnahmen und/oder Sensorwerte umfassen. Die Trainingsdaten D1, D2 werden von dem jeweiligen künstlichen neuronalen Netz KNN ausgewertet, um Eingaben, wie z. B. Fahrzeugdichte pro Raum, Fahrzeuggeschwindigkeit, Ampelfarbe usw., als Neuronen des künstlichen neuronalen Netzes zu bestimmen. Die Eingaben werden von dem künstlichen neuronalen Netz KNN gewichtet und über eine ausgewählte Übertragungsfunktion zu einer Netzeingabe verarbeitet. Der Anwender, bspw. der Fahrer, kann PASS/FAIL-Kriterien für die Netzeingabe in Abhängigkeit von unterschiedlichen Situationen bzw. Szenarien definieren, um das künstliche neuronale Netz KNN zu trainieren, oder die richtigen Reaktionen dem künstlichen neuronalen Netz KNN aktiv durch sein Fahrverhalten zeigen.

Wie es die Figur 2 weiterhin andeutet, kann unter einem Szenario S bzw. einer Situation zum Verwenden bei einem automatisierten und/oder autonomen Fahren bspw. eine Verkehrssituation entlang eines Streckenabschnittes auf einer Route eines Fahrzeuges verstanden werden.

Bei unterschiedlichen Szenarien S im Straßenverkehr kann der mindestens eine Extremwert W bspw. folgende Eventualitäten umfassen, wie z. B.:
- einen Steinschlag in der Frontscheibe,
- einen Reifen-Platzer,
- einen herunterfallenden Ast bei Starkwind,
- eine Extremsituation an Kreuzungen, Baustellen, Zubringerauffahrten usw.,
- einen plötzlichen Regen oder einen Hagel,
- ein Blitz-Eis,
- ein bei Rot über die Ampel fahrendes Fahrzeug,
- einen Gegenstand auf der Fahrbahn,
- eine Person auf der Fahrbahn,
- ein entgegenkommendes Fahrzeug,
- eine hohe Fahrzeugdichte,
- viele Passanten und Radfahrer,
- kaputte(s) nicht erkennbare(s) Straßenschild(er), und/oder
- Beschädigungen von Sensoren, wie z. B. einer Frontkamera, usw.

Im normalen Anlernprozess eines künstlichen neuronalen Netzes werden solche Eventualitäten nicht oder nur unzureichend berücksichtigt.

Die Erfindung hilft verbesserte Trainingsdaten D1, D2 bereitzustellen, um das künstliche neuronale Netz KNN zuverlässig trainieren zu können, um ein mögliches Fehlverhalten des neuronalen Netzes KNN vermeiden zu können und die Sicherheit beim späteren Verwenden des trainierten neuronalen Netzes KNN zu erhöhen. Die Erfindung kann diese Vorteile ermöglichen, da sie unterschiedliche wahrscheinliche und/oder unwahrscheinliche Eventualitäten bei einer späteren Verwendung des künstlichen neuronalen Netzes einzeln und/oder in beliebigen Kombinationen auf eine vorteilhafte Weise berücksichtigen kann.

Zum Anlernen bzw. Trainieren des neuronalen Netzes KNN kann der Anwender bzw. Tester die Strecken aktiv und/oder virtuell (bspw. mithilfe eines Kartenmodels) selbst abfahren, um die richtigen Reaktionen bei unterschiedlichen Szenarien S dem künstlichen neuronalen Netz KNN zu zeigen. Zudem und/oder stattdessen kann der Anwender sog. PASS/FAIL-Kriterien für unterschiedliche Szenarien S definieren.

Vorteilhafterweise kann mithilfe der Erfindung der Aufwand und die Menge an Bildaufnahmen und/oder Sensorwerten reduziert werden, um einen verbesserten und erweiterten Set an Trainingsdaten D1, D2 zu erhalten.

Wie es die Figur 1 verdeutlicht, werden die Trainingsdaten D1, D2 in zwei Stufen I, II bereitgestellt. In der ersten Stufe I werden die Trainingsdaten gemäß einem Szenario S, bspw. wie dem Szenario S aus der Figur 2, unverfälscht erfasst. Dabei wird eine (gemeint ist erste) Sequenz D1(t) von Trainingsdaten D1 zum Trainieren des künstlichen neuronalen Netzes KNN erhalten. Bei der ersten Stufe I kann das künstliche neuronale Netz KNN einfachheitshalber über Positivfälle und/oder Standartsituationen, bspw. reguläres Fahren, angelernt werden.

In der zweiten Stufe II werden dem gleichen Szenario S aus der ersten Stufe I mithilfe des mindestens einen Extremwertes W verschiedenste Eventualitäten aufgeprägt (einfach ausgedrückt S*=S+W). Bei dem manipulierten Szenario S* wird eine abgeänderte Sequenz D2(t) von verschärften Trainingsdaten D2 zum Trainieren des künstlichen neuronalen Netzes KNN erhalten. Bei der zweiten Stufe kann das künstliche neuronale Netz KNN über Extremfälle bzw. verschärfte Szenarien angelernt werden.

Diese verschärften bzw. erweiterten Trainingsdaten D2 aus der zweiten Stufe II werden vorteilhafterweise zusammen mit den unverarbeiteten Trainingsdaten D1 aus der ersten Stufe I zum Trainieren des künstlichen neuronalen Netzes KNN zur Verfügung gestellt.

Nach der zweiten Stufe II oder im Rahmen der zweiten Stufe II können noch weitere Stufen vorgesehen sein, in welchen dem gleichen Szenario S aus der ersten Stufe I unterschiedliche weitere Eventualitäten und/oder Eventualitäten-Kombinationen aufgeprägt werden können, um mehrere weitere, jeweils auf eine unterschiedliche Art abgeänderte Sequenzen D2(t) von verschärften Trainingsdaten D2 zum Trainieren des künstlichen neuronalen Netzes KNN zu erhalten.

Unter manipulierten Trainingsdaten D1 kann bspw. verstanden werden, dass z. B. ein Geschwindigkeitssensor einen plötzlichen Abfall der Geschwindigkeit liefert, wenn bspw. ein Stau als ein Extremwert W in das Szenario S eingeprägt wird.

In der ersten Stufe I können bspw. die kritischen Straßensituationen sondiert und/oder prognostiziert werden, um den mindestens einen Extremwert W für die zweite Stufe II zu bestimmen. Die erkannten kritischen Straßensituationen können in der Stufe II verschärft werden, indem der mindestens eine Extremwert W erhöht wird.

Wie es die Figur 2 zeigt, können für die Stufe I die Trainingsdaten D1 für unterschiedliche Szenarien S simuliert werden. Bei einer Simulation von Szenarien S können die Szenarien S vereinfacht dargestellt werden. Dabei können die Fahrzeuge bspw. als Punkte auf einer Karte abgebildet werden. Gebäude, Landschaften usw. können zunächst vernachlässigt werden. Der Einfluss von Gebäuden, Landschaften usw. auf den mindestens einen potentiellen Extremwert W kann nachträglich eingebracht werden, indem z. B. der mindestens eine Extremwert W verschärft wird oder gar neu hinzugefügt wird.

Zum anschließenden Anlernen des neuronalen Netzes KNN mithilfe von den bereitgestellten Trainingsdaten D1 aus der ersten Stufe und mithilfe von verschärften Trainingsdaten D2 aus der zweiten Stufe kann ein Anwender, bspw. ein Fahrer, dem künstlichen neuronalen Netz KNN das richtige Verhalten beibringen und/oder durch PASS/FAIL-Kriterien festlegen. Zum erfolgreichen Anlernen muss der Auswerte-Algorithmus des künstlichen neuronalen Netzes KNN in der ersten Stufe I und in der zweiten Stufe II bestehen.

Ein weiteres Beispiel für einen möglichen Extremwert kann ein Steinschlag in der Frontscheibe sein, bei dem bspw. die Frontkamera beschädigt wurde und die Auswertung in die Fahrrichtung nicht mehr möglich ist. Dabei könnte ein PASS-Kriterium für ein richtiges Fahrzeugverhalten sein, mit reduzierter Geschwindigkeit und eingeschaltetem Warnblinker die nächste Parklücke aufzusuchen. Dagegen kann ein FAIL-Kriterium für ein falsches Fahrzeugverhalten sein, wenn z. B. das Fahrzeug ohne Berücksichtigung der Frontkameraschäden weiterfährt.

Zusammengefasst können mithilfe der Erfindung zahlreiche Vorteile erreicht werden, insbesondere ein verbessertes Verfahren zum Bereitstellen von Trainingsdaten D1, D2 zum Anlernen eines künstlichen neuronalen Netzes KNN zur Verfügung gestellt werden, welches verbesserte und erweiterte Trainingsdaten D1, D2 zum Anlernen eines künstlichen neuronalen Netzes KNN liefert, welches die Menge an erforderlichen Bildaufnahmen und/oder Sensorwerten und/oder an Feldversuchen für die Trainingsdaten D1, D2 auf eine vorteilhafte Weise reduziert, ohne die Qualität der Trainingsdaten D1, D2 herabzusetzen, sondern vielmehr wesentlich zu erhöhen, welches ein verbessertes Anlernen eines künstlichen neuronalen Netzes KNN ermöglicht und welches die Sicherheit beim Verwenden des angelernten bzw. trainierten neuronalen Netzes KNN erheblich erhöht, insbesondere bei einem automatisierten und/oder autonomen Fahren. Außerdem kann mithilfe der Erfindung der Kundenkomfort gesteigert und das Vertrauen in die neue Technologie verstärkt werden.

Weiterhin ist es denkbar, dass der mindestens eine Extremwert W mindestens einen ersten Extremwert W1 eines ersten Grades umfasst, der für das Szenario S spezifisch ist, und/oder dass der mindestens eine Extremwert W mindestens einen zweiten Extremwert W2 eines zweiten Grades umfasst, der für die Folgen des Szenarios S wahrscheinlich ist. Auf diese Weise kann das Szenario S in der zweiten Stufe II eine Entwicklung von Eventualitäten vorausschauend berücksichtigen.

Ein entsprechendes Verfahren zum Anlernen eines künstlichen neuronalen Netzes (KNN), insbesondere zur Verwendung bei einem automatisierten und/oder autonomen Fahren, mithilfe von Trainingsdaten D1, D2, die durch das Verfahren bereitgestellt wurden, welches wie oben beschrieben ablaufen kann, stellt ebenfalls einen Aspekt der Erfindung dar.

Das künstliche neuronale Netz KNN kann zunächst mithilfe der Sequenz D1(t) von Trainingsdaten D1 trainiert werden, die beim Szenario S erhalten wurde, und anschließend mithilfe der abgeänderten Sequenz D2(t) von verschärften Trainingsdaten D2, die beim Manipulieren von Trainingsdaten D1, insbesondere derselben Sequenz D1(t), erhalten wurde, indem dem Szenario S mindestens ein Extremwert W aufgeprägt wurde.

Zum Trainieren des künstlichen neuronalen Netzes KNN können/kann mindestens ein PASS-Kriterium und/oder mindestens ein FAIL-Kriterium, insbesondere in Abhängigkeit von dem mindestens einen Extremwert W, definiert werden.

Ein dritter Aspekt der Erfindung ist: ein Computerprogrammprodukt, umfassend Befehle, die bei der Ausführung des Programms durch einen Computer diesen veranlassen, ein Verfahren zum Bereitstellen von Trainingsdaten zum Anlernen eines künstlichen neuronalen Netzes und/oder ein Verfahren zum Anlernen eines künstlichen neuronalen Netzes auszuführen, welche wie oben beschrieben ablaufen können/kann.

Ein vierter Aspekt der Erfindung ist: eine Datenstruktur, die insbesondere mithilfe des Verfahrens erhalten wurde, welches wie oben beschrieben ablaufen kann,
aufweisend:
- eine Sequenz D1(t) von Trainingsdaten D1, die bei einem Szenario S erhalten wurde, und
- eine abgeänderte Sequenz D2(t) von verschärften Trainingsdaten D2, die beim Manipulieren von Trainingsdaten D1, insbesondere derselben Sequenz D1(t), erhalten wurde, indem dem Szenario S mindestens ein Extremwert W aufgeprägt wurde.

Mithilfe der erfindungsgemäßen Datenstruktur kann die Qualität der Daten erheblich verbessert werden. Die Datenstruktur ist einfach erstellbar, weist nur zwei Felder auf und kann einfach ausgelesen werden.

Die voranstehende Beschreibung der Figuren beschreibt die vorliegende Erfindung ausschließlich im Rahmen von Beispielen. Selbstverständlich können einzelne Merkmale der Ausführungsformen, sofern es technisch sinnvoll ist, frei miteinander kombiniert werden, ohne den Rahmen der Erfindung zu verlassen.

### Bezugszeichenliste

- D1: Trainingsdaten
- D2: Trainingsdaten

- D1(t): Sequenz
- D2(t): Sequenz

- KNN: künstliches neuronales Netz

- S: Szenario
- S*: Szenario

- W: Extremwert

## Patentansprüche

1. Verfahren zum Bereitstellen von Trainingsdaten (D1, D2) zum Anlernen eines künstlichen neuronalen Netzes (KNN), insbesondere zum Verwenden bei einem automatisierten und/oder autonomen Fahren,
aufweisend folgende Schritte:
- Bereitstellen von Trainingsdaten (D1) bei einem Szenario (S) einer vorgesehenen Verwendung des trainierten künstlichen neuronalen Netzes (KNN), um eine Sequenz (D1(t)) von Trainingsdaten (D1) zum Trainieren des künstlichen neuronalen Netzes (KNN) zu erhalten,
- Manipulieren von Trainingsdaten (D1), insbesondere derselben Sequenz (D1(t)), indem dem Szenario (S) mindestens ein Extremwert (W) aufgeprägt wird, um eine abgeänderte Sequenz (D2(t)) von verschärften Trainingsdaten (D2) zum Trainieren des künstlichen neuronalen Netzes (KNN) zu erhalten.

2. Verfahren nach Anspruch 1,
**dadurch gekennzeichnet,**
**dass** die Trainingsdaten (D1) erfasste und/oder simulierte Bildaufnahmen und/oder Sensorwerte aufweisen.

3. Verfahren nach Anspruch 1 oder 2,
**dadurch gekennzeichnet,**
**dass** das Szenario (S) einen regulären Verlauf bei einer vorgesehenen Verwendung des trainierten künstlichen neuronalen Netzes (KNN) aufweist,
und/oder dass ein manipuliertes Szenario (S*) mit dem mindestens einen aufgeprägten Extremwert (W) einen Notfall-Verlauf bei einer vorgesehenen Verwendung des trainierten künstlichen neuronalen Netzes (KNN) simuliert,
und/oder dass in Abhängigkeit von dem mindestens einen Extremwert (W) ein PASS-Kriterium und/oder ein FAIL-Kriterium zum Bestehen des Szenarios (S) und/oder des manipulierten Szenarios (S*) mit dem mindestens einen aufgeprägten Extremwert (W) bestimmt werden/wird.

4. Verfahren nach einem der vorhergehenden Ansprüche,
**dadurch gekennzeichnet,**
**dass** beim Bereitstellen von Trainingsdaten (D1) die Trainingsdaten (D1) in einem Normalbetrieb bei einer vorgesehenen Verwendung des trainierten künstlichen neuronalen Netzes (KNN) erfasst werden.

5. Verfahren nach einem der vorhergehenden Ansprüche,
**dadurch gekennzeichnet,**
**dass** beim Bereitstellen von Trainingsdaten (D1) die Trainingsdaten (D1) in einem Simulationsbetrieb bei einer vorgesehenen Verwendung des trainierten künstlichen neuronalen Netzes (KNN) simuliert werden,
wobei insbesondere das Szenario (S) im Simulationsbetrieb vereinfacht dargestellt wird.

6. Verfahren nach einem der vorhergehenden Ansprüche,
**dadurch gekennzeichnet,**
**dass** beim Bereitstellen von Trainingsdaten (D1) der mindestens eine Extremwert (W) für einen regulären Verlauf des Szenarios (S) ermittelt und/oder für einen Notfall-Verlauf des Szenarios (S) vorhergesagt wird,
und/oder dass beim Manipulieren von Trainingsdaten (D1) der mindestens eine Extremwert (W) verschärft und/oder neu hinzugefügt wird.

7. Verfahren nach einem der vorhergehenden Ansprüche,
**dadurch gekennzeichnet,**
**dass** der mindestens eine Extremwert (W) mindestens einen ersten Extremwert (W1) eines ersten Grades umfasst, der für das Szenario (S) spezifisch ist,
und/oder dass der mindestens eine Extremwert (W) mindestens einen zweiten Extremwert (W2) eines zweiten Grades umfasst, der für die Folgen des Szenarios (S) wahrscheinlich ist.

8. Verfahren zum Anlernen eines künstlichen neuronalen Netzes (KNN), insbesondere zur Verwendung bei einem automatisierten und/oder autonomen Fahren, mithilfe von Trainingsdaten (D1, D2), die durch das Verfahren nach einem der vorhergehenden Ansprüche bereitgestellt wurden.

9. Verfahren nach dem vorhergehenden Anspruch,
**dadurch gekennzeichnet,**
**dass** das künstliche neuronale Netz (KNN) mithilfe der Sequenz (D1(t)) von Trainingsdaten (D1) trainiert wird, die beim Szenario (S) erhalten wurde,
und **dass** das künstliche neuronale Netz (KNN) anschließend mithilfe der abgeänderten Sequenz (D2(t)) von verschärften Trainingsdaten (D2) trainiert wird, die beim Manipulieren von Trainingsdaten (D1), insbesondere derselben Sequenz (D1(t)), erhalten wurde, indem dem Szenario (S) mindestens ein Extremwert (W) aufgeprägt wurde.

10. Verfahren nach einem der vorhergehenden Ansprüche 8 oder 9,
**dadurch gekennzeichnet,**
**dass** zum Trainieren des künstlichen neuronalen Netzes (KNN) mindestens ein PASS-Kriterium und/oder mindestens ein FAIL-Kriterium, insbesondere in Abhängigkeit von dem mindestens einen Extremwert (W), definiert werden/wird.

11. Computerprogrammprodukt, umfassend Befehle, die bei der Ausführung des Programms durch einen Computer diesen veranlassen, ein Verfahren nach einem der vorhergehenden Ansprüche 1 bis 7 und/oder 8 bis 10 auszuführen.

12. Datenstruktur, die insbesondere mithilfe des Verfahrens nach einem der vorhergehenden Ansprüche 1 bis 7 erhalten wurde,
aufweisend:
- eine Sequenz (D1(t)) von Trainingsdaten (D1), die bei einem Szenario (S) erhalten wurde, und
- eine abgeänderte Sequenz (D2(t)) von verschärften Trainingsdaten (D2), die beim Manipulieren von Trainingsdaten (D1), insbesondere derselben Sequenz (D1(t)), erhalten wurde, indem dem Szenario (S) mindestens ein Extremwert (W) aufgeprägt wurde.
